# EUROPÄISCHE PATENTSCHRIFT

(11) **EP 0 486 505 B1**
(45) Veröffentlichungstag und Bekanntmachung des Hinweises auf die Patenterteilung: **28.09.1994**
(21) Anmeldenummer: 90910099.2
(22) Anmeldetag: 07.07.1990
(51) Int. Cl.: F02M 45/06

(54) **KRAFTSTOFFEINSPRITZPUMPE FÜR DIESELBRENNKRAFTMASCHINEN**
FUEL INJECTION PUMP FOR DIESEL INTERNAL COMBUSTION ENGINES
POMPE D'INJECTION DE CARBURANT POUR MOTEURS DIESEL A COMBUSTION INTERNE

(30) Priorität: 08.08.1989 DE 3926166
(43) Veröffentlichungstag der Anmeldung: 27.05.1992
(73) Patentinhaber: ROBERT BOSCH GMBH, 70442 Stuttgart (DE)
(72) Erfinder: SIEBERT, Hans-Joachim, D-7141 Schwieberdingen (DE); GRIESHABER, Hermann, D-7447 Aichtal-Aich (DE); SCHENK, Bernhard, D-7000 Stuttgart 31 (DE); EGLER, Walter, D-7000 Stuttgart (DE); MEISSNER, Norbert, D-7257 Ditzingen (DE)
(86) Internationale Anmeldenummer: DE9000508
(87) Internationale Veröffentlichungsnummer: WO9102151

(56) Entgegenhaltungen:
- DE-C- 0 736 684
- FR-A- 2 389 008
- FR-A- 2 620 771
- FR-A- 2 629 138
- GB-A- 0 893 621

## Beschreibung

### Stand der Technik

Die Erfindung bezieht sich auf eine Kraftstoffeinspritzpumpe für Dieselbrennkraftmaschinen zur Förderung einer in eine Vor- und Haupteinspritzmenge unterteilten Kraftstoffmenge gemäß dem gattungsbildenden Oberbegriff des Patentanspruchs 1.

Bei modernen Dieselbrennkraftmaschinen, insbesondere solchen mit Direkteinspritzverfahren, ist es aufgrund gesetzgeberischer Auflagen und wegen der Verbesserung der Akzeptanz, Dieselbrennkraftmaschinen wegen ihrer günstigen Verbrauchswerte und niedriger Treibstoffpreise auch vermehrt einzusetzen, dringend erforderlich, die störenden Verbrennungsgeräusche unter Beibehaltung der sehr günstigen Verbrauchs- und Abgaswerte herabzusetzen.

Aus der Literatur und aus den Ergebnissen von Prüfstands- und Fahrversuchen ist es bekannt, daß eine merkliche Geräuschabsenkung in allen Last- und Drehzahlbereichen bei mit Direkteinspritzung arbeitenden Dieselmotoren nur durch das Einspritzen einer in eine Vor- und eine Haupteinspritzmenge unterteilten Kraftstoffmenge erzielbar ist. Um den bei Dieselmotoren gefürchteten Schwarzrauch und den bisher sehr günstigen Verbrauch durch die Voreinspritzung nicht zu erhöhen, muß die richtige Voreinspritzmenge und der in Versuchen ermittelte richtige Abstand zwischen der Vor- und Haupteinspritzung genau eingehalten werden. Obwohl die optimale Voreinspritzmenge und die optimale Spritz- bzw. Förderpause zwischen der Vor- und Haupteinspritzung last- und drehzahlabhängig unterschiedlich sind, kann ein brauchbarer Kompromiß bezüglich der Geräuschabsenkung einerseits und den Emissions- und Verbrauchswerten andererseits mit einer kleinen konstanten Voreinspritzmenge und einer konstanten Förderpause erreicht werden. Ein optimales Ergebnis kann nur mit zwei individuell gesteuerten Kraftstoffeinspritzpumpen und zugehörigen Einspritzdüsen bzw. Doppeleinspritzdüsen für die Vor- und für die Haupteinspritzung erzielt werden. Eine solche Ausrüstung wäre zu kosten- und bauraumaufwendig und kann deshalb bei kleinen und mittleren Dieselbrennkraftmaschinen, vor allem wenn diese in Kraftfahrzeuge eingebaut werden, nicht eingesetzt werden, und es wurde deshalb schon seit Jahrzehnten nach Lösungen unter Verwendung einer einzigen Kraftstoffeinspritzpumpe gesucht.

Aus der DE-PS 736 684 ist z. B. eine Kraftstoffeinspritzpumpe der gattungsgemäßen Bauart bekannt, deren Pumpenkolben zur Förderung der Vor- und der Haupteinspritzmenge und zur Steuerung der dazwischenliegenden Förderpause mit einem die erste Steuerkante enthaltenden Absatz, einer die schräge Steuerkante bildenden Ausnehmung und einer die Unterbrechung steuernden Quernut versehen ist und deren Pumpenzylinder außer zwei in der Höhe versetzten Steuerbohrungen einen separaten Entlastungskanal aufweist, der, durch die Quernut gesteuert, in der Förderpause Entlastungskraftstoff in den Federraum der Einspritzdüse leitet und dort zu einer Druckerhöhung beiträgt. Dazu steuert die dauernd mit dem Pumpenarbeitsraum verbundene Quernut eine zusätzliche Steueröffnung in der Wand des Pumpenzylinders. Bei dieser Anordnung kann in nachteiliger Weise die Dauer der Förderpause nicht kleiner gemacht werden als die Unterbrechungsdauer, die aus der Summe der von der Breite der Quernut und dem Durchmesser der zusätzlichen Steueröffnung festgelegten Hubanteile resultiert. Da die Mindestbreite der Quernut und der Durchmesser der zugehörigen Steueröffnung ohne merkliche Drosselung von der bei der höchsten Vollastdrehzahl durchfließenden Zwischenabsteuermenge bestimmt werden, kann bei der bekannten Pumpe die gewünschte kurze Unterbrechungsdauer nicht verwirklicht werden. Außerdem wird ein viel zu großer Hubanteil des bauartbedingt begrenzten Einspritzpumpennockenhubes verbraucht, und die mit Abstand zueinander auf gegenüberliegenden Seiten des Pumpenkolbens angebrachten, vom Absatz und von der Ausnehmung gebildeten, bei der Einspritzung mit Hochdruck beaufschlagten Flächen erzeugen, da nur eine, von einer schrägen Steuerkante begrenzte Ausnehmung vorhanden ist, einen sehr hohen Seitendruck und bin Kippmoment am Pumpenkolben. Dadurch besteht wegen der erhöhten Reibungskräfte die Gefahr eines Festfressens des Kolbens mit entsprechenden Folgeschäden. Ein Ziel der Erfindung ist deshalb darin zu sehen, eine Kraftstoffeinspritzpumpe bereitzustellen, mittels der mit einfachen Mitteln eine kleine, genau definierte Voreinspritzmenge mit relativ kurzem Spritzabstand zur Haupteinspritzung gefördert wird. Die zu treffenden Maßnahmen dürfen, vor allem beim Vollastbetrieb, am Pumpenelement nicht zu erhöhten Seitenkräften mit daraus folgender "Freßneigung" führen.

### Vorteile der Erfindung

Die erfindungsgemäße Kraftstoffeinspritzpumpe mit den kennzeichnenden Merkmalen des Patentanspruchs 1 weist außer den gewünschten funktionellen auch eine Reihe fertigungsmäßiger Vorteile auf. So lassen sich in der Zylinderbüchse die beiden zueinander fluchtenden Steuerbohrungen und die im festgelegten Abstand zum Pumpenarbeitsraum hin versetzte Ringnut mit vertretbarem Aufwand in der erforderlichen Genauigkeit herstellen, weil z. B. die Breite der Ringnut von untergeordneter Bedeutung ist und grob toleriert werden kann, da nur die Unterkante der Ringnut eine Steuerfunktion ausübt. Diese Unterkante bestimmt mit der zweiten Steuerkante der Quernut das Förderende der Voreinspritzung und kann deshalb genau genug mit dem engtolerierten, festgelegten Abstand "a" zu den Steuerbohrungen in die Wandfläche des Pumpenzylinders eingeschliffen werden. Diese Vorteile weist auch die zweite Merkmalsgruppe auf, gemäß der die die Dauer der Förderpause festlegende Differenz zwischen der Breite der Quernut und dem festgelegten Abstand wiederum von diesem Abstand zwischen der zweiten Steuerbohrung und der Unterkante der Ringnut abhängt, und wodurch die genau fertigbare dritte Steuerkante an der Quernut mit Abschluß der zweiten Steueröffnung den Förderbeginn der Haupteinspritzung festlegt. Die zusätzliche zweite, ebenfalls eine schräge Steuerkante aufweisende Ausnehmung in der Mantelfläche des Pumpenkolbens dient in der bezüglich des Verschleißes gefährdeten Höchstdruckphase kurz vor und während der Absteuerung dem Ausgleich einer ansonsten einseitig auf den Pumpenkolben einwirkenden Seitenkraft, und der gemäß dem letzten kennzeichnenden Merkmal des Patentanspruchs über den Ausschnitt und durch die Ringnut zur Quernut und von dieser über die zweite Steueröffnung zum Niederdruckraum verlaufende Entlastungskanal ermöglicht eine exakte Steuerung der genau einzuhaltenden Förderpause zwischen Vor- und Haupteinspritzung.

Mit den in den Unteransprüchen aufgeführten Maßnahmen sind vorteilhafte Weiterbildungen und Verbesserungen der der Steuerung einer Vor- und Haupteinspritzung dienenden, erfindungsgemäßen Kraftstoffeinspritzpumpe erzielbar. So ist durch die gemäß den Merkmalen des Anspruchs 2 pumpenarbeitsraumseitig mit einer weitgehend geraden Begrenzungskante versehenen Steueröffnungen zusammen mit der ersten und dritten Steuerkante ein extrem genauer, scharf begrenzter Förderbeginn sowohl der Voreinspritzung als auch der Haupteinspritzung steuerbar, die wegen des durch diese Merkmale fehlenden Drosseleffektes praktisch keine störende, drehzahlabhängige Veränderung erfahren. Diese positive Wirkung ist auch mit einer nur geringfügig gebogenen, ansonsten aber senkrecht zur Kolbenlängsachse verlaufenden Begrenzungskante erreichbar, wobei eine solche Kante eine etwas größere Lageabweichung der zur Fertigung der Steueröffnungen erforderlichen Werkzeuge zuläßt.

Weisen die als Formlöcher gefertigten Steueröffnungen in dem mit den schrägen Steuerkanten des Pumpenkolbens zusammenwirkenden Bereich den gemäß dem kennzeichnenden Merkmal des Anspruchs 3 definierten Radius R auf, dann erfolgt die Absteuerung der Haupteinspritzung in der bewährten, von den runden Steuerbohrungen her bekannten Weise, da ein zu scharfes Absteuern bei Förderende der Haupteinspritzung wegen der dort herrschenden, extrem hohen Drücke zu Kavitation und Erosion an den betreffenden Bauteilen führen würde. Durch die gemäß den Merkmalen der Ansprüche 4 oder 6 symmetrisch erstellbaren bzw. geformten Steueröffnungen können beide mittels eines einzigen Räumwerkzeugs und in einem Arbeitsgang herstellt werden, was die Fertigung wesentlich vereinfacht. Ist die gerade Begrenzungskante aber gemäß den Merkmalen des Anspruchs 5 deutlich länger als der zweifache Radius R der Steueröffnungen, dann ist wegen der längeren Begrenzungskante ein noch schnellerer und abrupterer Förderbeginn sowohl der Vor- als auch der Haupteinspritzung steuerbar, die beiden Steueröffnungen müssen jedoch getrennt, auf Umschlag oder von beiden Seiten zugleich, z. B. mittels Erodieren gefertigt werden.

Ist gemäß Anspruch 7 der Abstand zwischen der Quernut und der pumpenarbeitsraumseitigen Stirnfläche kleiner als die Breite der Ringnut, dann ist beim Förderende der Voreinspritzung eine kürzestmögliche, direkte Verbindung vom Pumpenarbeitsraum über die Ringnut zur Quernut und zweiten Steueröffnung hergestellt, was das gewünschte schnelle Förderende unterstützt, und die gemäß Anspruch 8 relativ geringe Breite der Ringnut führt in vorteilhafter Weise dazu, daß zumindest während des weitaus größten Teils der Haupteinspritzung eine Führung des der Stirnfläche benachbarten Kolbenmantelteiles innerhalb der Zylinderbohrung erfolgt.

Die erste Merkmalsgruppe aus dem Kennzeichenteil des Patentanspruchs 1 mit den beiden zueinander fluchtenden Steuerbohrungen, der im festgelegten Abstand "a" zu den Steuerbohrungen hin versetzten Ringnut und der als Sackausnehmung ausgebildeten Quernut am Pumpenkolben ist an sich aus einer auch der Vor- und Haupteinspritzung dienenden, ansonsten aber abweichend gestalteten Kraftstoffeinspritzpumpe bekannt (GB-PS 688 003). Dort wird die Förderpause zwischen Vor- und Haupteinspritzung durch die Differenz zwischen der Breite der Ringnut und der Höhe des oberhalb der Quernut liegenden Pumpenkolbenbereiches bestimmt, wozu die Stirnfläche ununterbrochen rund sein muß und in äußerst schwierig zu verwirklichenden Weise die Breite der Ringnut extrem genau gefertigt werden muß, da beide Begrenzungskanten eine Steuerfunktion haben. Außerdem ist bei der dortigen Konstruktion keine extrem kleine Voreinspritzmenge mit genau definiertem Förderbeginn steuerbar, da der Pumpenarbeitsraum über ein Saugventil gefüllt werden muß und die Pumpe in der unteren Totpunktlage zu fördern beginnt, wodurch ein besonders langsamer Druckanstieg und wegen der unklaren Druckverhältnisse ein zu ungenauer Förderbeginn der Voreinspritzung eingeleitet wird.

### Zeichnung

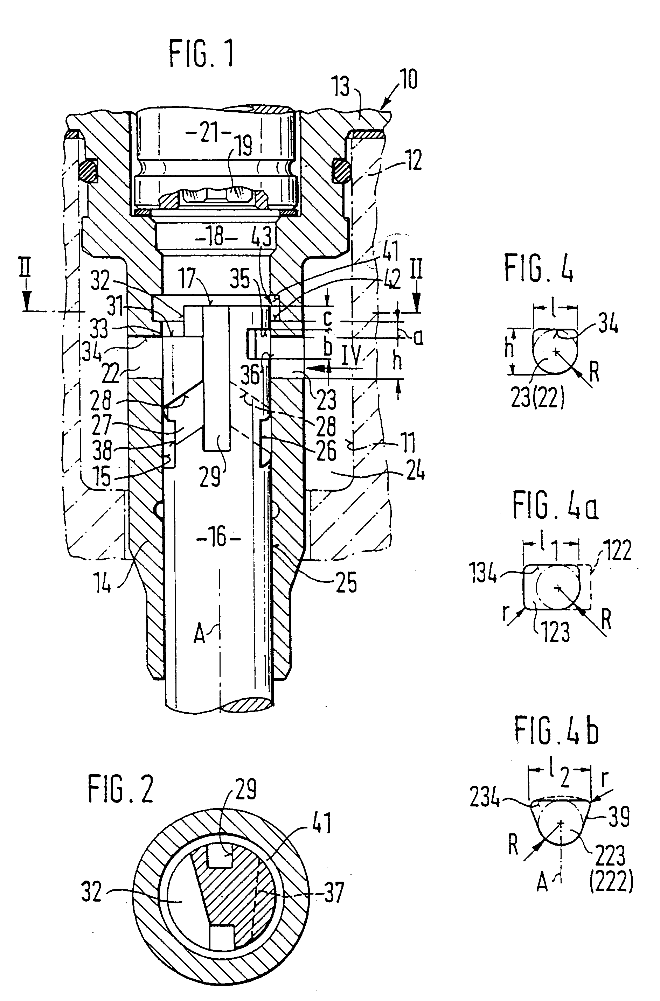

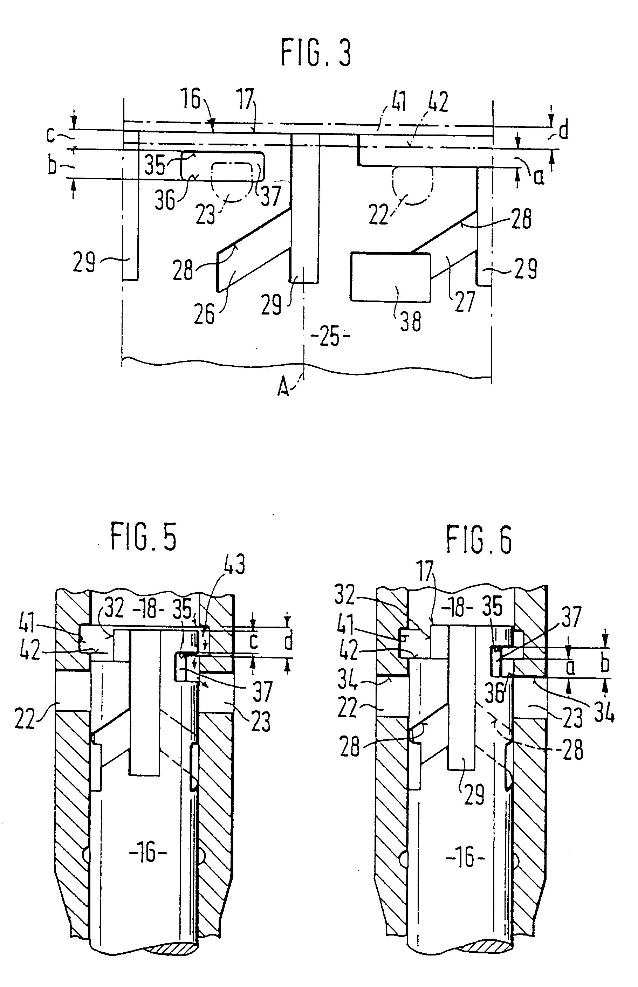

Ein Ausführungsbeispiel der Erfindung mit Varianten verschieden geformter Steueröffnungen ist in der Zeichnung dargestellt und in der nachfolgenden Beschreibung näher erläutert. Es zeigen Figur 1 einen Längsschnitt durch den erfindungswesentlichen Teil eines Pumpenelements einer für eine Vor- und Haupteinspritzung ausgebildeten Kraftstoffeinspritzpumpe mit in der Förderbeginnstellung für die Voreinspritzung stehendem Pumpenkolben, Figur 2 einen Querschnitt längs der Linie II-II in Figur 1, Figur 3 eine Abwicklung der Mantelfläche des Pumpenkolbens der in den Figuren 1 und 2 dargestellten Kraftstoffeinspritzpumpe mit strichpunktiert eingezeichneter Steueröffnung und Ringnut des zugehörigen Pumpenzylinders, Figuren 4, 4a und 4b drei Formvarianten der Steueröffnungen, in Richtung des Pfeiles IV in Figur 1 gesehen, und Figuren 5 und 6 je einen Teillängsschnitt entsprechend Figur 1, jedoch mit in der Stellung für das Förderende der Voreinspritzung bzw. für den Förderbeginn der Haupteinspritzung stehendem Pumpenkolben.

### Beschreibung des Ausführungsbeispieles

Das in der Zeichnung nur in seinem erfindungswesentlichen Bereich dargestellte Pumpenelement 10 ist in eine abgesetzte Aufnahmebohrung 11 eines nur strichpunktiert angedeuteten Pumpengehäuses 12 eingesetzt und im dargestellten Beispiel mittels eines Flansches 13 in bekannter Weise befestigt. Der Flansch 13 ist an einen als Flanschelementbüchse ausgebildeten Pumpenzylinder 14 angeformt, in dessen Zylinderbohrung 15 ein Pumpenkolben 16 axial- und drehbeweglich geführt ist. Der als Teil der Zylinderbohrung 15 einerseits von einer Stirnfläche 17 begrenzte Pumpenarbeitsraum 18 ist andererseits von einem ein Druckventil 19 enthaltenden Druckventilgehäuse 21 abgeschlossen, die beide von bekannter Bauart und deshalb nur teilweise dargestellt sind. Der Pumpenarbeitsraum 18 ist über zwei diametral einander gegenüberliegende, zugleich als Saug- und Rückströmöffnungen dienende Steueröffnungen 22 und 23 mit einem zugleich als Saug- und Rückströmraum dienenden Niederdruckraum 24 verbunden. In diesen Niederdruckraum 24 wird über eine nicht näher dargestellte Kraftstoffzuleitung der von einer Vorförderpumpe unter Zulaufdruck gesetzte Kraftstoff gefördert.

In die mit 25 bezeichnete Mantelfläche des Pumpenkolbens 16 sind zwei um 180° zueinander versetzte, als Schrägnuten ausgebildete Ausnehmungen 26 und 27 eingearbeitet, deren zum Pumpenarbeitsraum 18 hinweisende Begrenzung mit der Mantelfläche 25 des Pumpenkolbens 16 jeweils eine schräge Steuerkante 28 bildet. Diese Ausnehmungen 26 und 27 sind ständig über je eine als Längsnut in den Pumpenkolben 16 eingearbeitete Stoppnut 29 mit dem Pumpenarbeitsraum 18 verbunden. Anstelle der Stoppnut 29 kann selbstverständlich auch eine in die Ausnehmungen 26 und 27 mündende Längs- und Querbohrung innerhalb des Pumpenkolbens 16 den Pumpenarbeitsraum 18 mit den Ausnehmungen verbinden, und anstelle der schrägen, von einer Schrägnut gebildeten Steuerkante 28 können zur Steuerung der Einspritzmenge auch schraubenlinienförmig in die Mantelfläche eingefräste oder eingeschliffene Steuerkanten verwendet werden.

Zur Steuerung einer in eine Vor- und Haupteinspritzmenge unterteilten Kraftstoffmenge ist die Mantelfläche 25 des Pumpenkolbens 16 außer durch die Ausnehmungen 26 und 27 und Stoppnuten 29 in einem mit der ersten Steueröffnung 22 zusammenwirkenden Bereich noch von einem von der pumpenarbeitsraumseitigen Stirnfläche 17 des Pumpenkolbens 16 ausgehenden und gegenüber dieser einen zurückgesetzten Absatz 31 bildenden Ausschnitt 32 unterbrochen. Dabei bildet der Absatz 31 mit der Mantelfläche 25 eine erste waagrechte, senkrecht zu der mit A bezeichneten Kolbenlängsachse sich erstreckende Steuerkante 33, die mit der ersten Steueröffnung 22 zusammenarbeitet und in der gezeichneten Förderbeginnstellung des Pumpenkolbens für die Voreinspritzung eine pumpenarbeitsraumseitige Begrenzungskante 34 der ersten Steueröffnung 22 abschließt. Dem Ausschnitt 32 etwa diametral gegenüberliegend, ist in dem von der zweiten Steueröffnung 23 gesteuerten Bereich der Mantelfläche 25 eine pumpenarbeitsraumseitig eine zweite waagrechte Steuerkante 35 und dieser gegenüberliegend eine dritte Steuerkante 36 bildende Quernut 37 angeordnet. Diese Quernut 37 liegt, in Richtung der Kolbenlängsachse A gesehen, zwischen der Stirnfläche 17 und der ersten Ausnehmung 26 und ist als kolbenseitig geschlossene Sackausnehmung ausgebildet, deren Form und umfangsseitige Erstreckung aus Figur 2 und auch aus der Abwicklung der Mantelfläche 25 des Pumpenkolbens in Figur 3 deutlich zu ersehen ist. Sie ist in der gezeigten Form durch Überfräsen und Überschleifen herstellbar, kann selbstverständlich auch durch Tauchfräsen und Tauchschleifen sowie im Abwälzverfahren hergestellt werden. In dem dem Pumpenarbeitsraum 18 abgewandten Endbereich der zweiten Ausnehmung 27 ist noch eine durch eine zweite Quernut 38 gebildete Ausnehmung vorhanden, die in bekannter Weise der Begrenzung der Startmehrmenge dient und für die vorliegende Erfindung allerdings unerheblich ist.

Der Pumpenzylinder 14, der im dargestellten Ausführungsbeispiel Teil eines sogenannten Flanschelements ist, kann selbstverständlich auch jede andere bekannte Form einer Zylinderbüchse oder Teil eines vollkommen aus Stahl gefertigten Zylinderkopfes sein. Die beiden einander diametral gegenüberliegenden Steueröffnungen 22, 23 müssen zur Erfüllung der vorgesehenen Funktion sich exakt auf gleicher Höhe zueinander fluchtend gegenüberliegen, da die verschiedenen Steuerkanten am Pumpenkolben 16, z. B. bei der Steuerung des Förderbeginns der Voreinspritzung und der Haupteinspritzung, nacheinander mit der ersten Steueröffnung 22 und dann mit der zweiten Steueröffnung 23 zusammenwirken, so daß nur Lageabweichungen von wenigen hunderstel Millimetern zugelassen werden können. Obwohl die Steueröffnungen 22, 23 einen bekannten, in den Figuren 4, 4a und 4b strichpunktiert eingezeichneten kreisrunden Querschnitt aufweisen können, und obwohl der bekannte Vordrosseleffekt durch eine gegenüber üblichen Steuerbohrungen vergrößerten Querschnitt teilweise behoben werden kann, wird doch beim dargestellten Ausführungsbeispiel ein konstanter, exakter und nahezu drehzahlunabhängiger Förderbeginn durch die Ausgestaltung der Steueröffnungen 22 und 23 als Formöffnungen mit einem unrunden Querschnitt erreicht. Die pumpenarbeitsraumseitige Begrenzungskante dieser Steueröffnungen ist bei den in den Figuren 4, 4a und 4b dargestellten Varianten des bevorzugten Ausführungsbeispiels absolut gerade d. h. waagrecht bzw. senkrecht zur Kolbenlängsachse A ausgebildet, wie es z. B. die in Pfeilrichtung IV in Figur 1 gesehene Ansicht nach Figur 4 zeigt. Die Länge 1 dieser Begrenzungskante 34 ist in dem in Figur 4 dargestellten Ausführungsbeispiel etwa gleich dem zweifachen Radius R, mit dem die Steueröffnungen 22 und 23 auf der der Begrenzungskante 34 gegenüberliegenden Seite versehen sind. Dieser Radius R entspricht dem halben Durchmesser der üblichen Steuerbohrungen und muß zumindest in dem Bereich der Steueröffnungen vorhanden sein, der mit der schrägen Steuerkante 28 zusammenwirkt. Deshalb sind zwei zusätzlich in den Figuren 4a und 4b dargestellte Ausführungsvarianten der Steueröffnungen 22 und 23 entsprechend geformt.

So ist eine der Varianten, die Steueröffnung 123 in Figur 4a, zur Erzielung einer längeren Begrenzungskante 134 einseitig, von der mit dem Radius R versehenen und mit der schrägen Steuerkante 28 zusammenwirkenden Ecke aus tangential zur Pumpenzylinderwand verlängert ausgeführt. Deshalb muß die gegenüberliegende Steueröffnung 122 mit der gleichen Form auf Umschlag, d. h. 180° versetzt, gefertigt werden. Diese auf der Rückseite liegende Steueröffnung 122 ist gestrichelt eingezeichnet. Die Länge l₁ der geraden Begrenzungskante 134 ist größer, vorzugsweise um 30 bis 50 %, als der zweifache Radius R dieser Steueröffnung 122 bzw. 123. Die drei anderen, nicht mit dem Radius R versehenen Ecken dieser Steueröffnungen 122, 123 sind mit einem kleinen, die Kerbwirkung reduzierenden Radius r ausgestattet.

Eine weitere Ausführungsvariante der Steueröffnungen, die in Figur 4b gezeigte Steueröffnung 223, ist mit Bezug auf die Kolbenlängsachse A symmetrisch geformt. Die mit Ausnahme der beiden Übergangsradien r sonst gerade Begrenzungskante 234, deren Länge l₂ mehr als doppelt so lang ist wie der Radius R, ist mittels zweier, unter gleichem Neigungswinkel zur Kolbenlängsachse A geneigter Seitenkanten 39 mit dem Radius R verbunden und weist somit einen, einem auf der Spitze stehenden Dreieck angenäherten Querschnitt auf. Wegen des mit Bezug auf die Kolbenlängsachse A völlig symmetrischen Querschnittes hat in diesem Fall die gegenüberliegende erste Steueröffnung 222 eine völlig gleiche Form, liegt mit sämtlichen Konturen völlig in der Flucht der dargestellten zweiten Steueröffnung 223, also genau hinter der zweiten Steueröffnung 223. Deshalb ist in Figur 4b die zugehörige Bezugszahl der zweiten Steueröffnung 223 in Klammern gesetzt. Die symmetrische Form der in den Figuren 4 und 4b dargestellten Steueröffnungen ermöglicht ihre Herstellung in einem durchgehenden Arbeitsgang, z. B. mittels einer Räumnadel.

Die in einer bevorzugten Formgebung in Figur 4 und in den Figuren 4a und 4b dargestellte, als durchgehende Formöffnung ausgebildete Steueröffnung 22 und 23, bzw. 122 und 123 oder 222 und 223 weist in allen drei Ausführungsvarianten eine völlig gerade Begrenzungskante 34 bzw. 134 oder 234 auf, die aber auch ohne Verlust ihrer erfindungswesentlichen Vorteile einer sehr schnellen Zusteuerung beim Förderbeginn der Vor- und der Haupteinspritzung und damit der gewünschten Lastunabhängigkeit ganz schwach, d. h. mit einem sehr großen Radius gewölbt bzw. gebogen sein kann. Diese Formgebung ist, zur deutlicheren Darstellung etwas übertrieben, gestrichelt in Figur 4b eingezeichnet und hat den Vorteil, daß geringfügige, werkzeugbedingte Schrägstellungen der Steueröffnung sich nicht nachteilig auswirken. Die in den Figuren 1 und 4 eingezeichnete in Hubrichtung des Pumpenkolbens 16 gemessene Höhe h der Steueröffnungen 22 und 23 entspricht dem doppelten Radius R und dem Durchmesser einer für die entsprechenden Pumpengrößen üblichen Steuerbohrung. Diese Höhe wird bei der vorliegenden Konstruktion vorgesehen, um die gleichen Hubverhältnisse wie bei einer serienmäßig ohne Voreinspritzung arbeitenden Kraftstoffeinspritzpumpe beizubehalten. Abweichungen von diesem Standardmaß sind jedoch ohne weiteres möglich, so ist auch als Ersatz der in den Figuren 4, 4a und 4b gezeigten Formöffnungen eine im Durchmesser größere Steuerbohrung einsetzbar, die, wenn die sonstigen Hubverhältnisse es gestatten, durch den größeren Radius auch eine schnellere und damit weniger drehzahlabhängige Steuerung der Förderbeginne von Vor- und Haupteinspritzung ermöglicht.

Wie aus den Figuren 1 und 2 weiterhin zu entnehmen ist, ist oberhalb der beiden Steueröffnungen 22 und 23, d. h. zum Pumpenarbeitsraum 18 hin versetzt, eine umlaufende und in sich geschlossene Ringnut 41 in die Innenwandfläche der Zylinderbohrung 15 eingearbeitet. Diese Ringnut 41 hat zu den beiden Steueröffnungen 22, 23 hin eine mit der zweiten Steuerkante 35 der Quernut 37 zusammenwirkende, also steuernde Unterkante 42, die in einem genau festgelegten Abstand a zu der ihr zugewandten Begrenzungskante 34 der Steueröffnungen 22 und 23 hergestellt ist. Desweiteren ist eine den Abstand zwischen der zweiten Steuerkante 35 und der dritten Steuerkante 36 bestimmende Breite b der Quernut 37 um eine die weiter hinten näher erläuterte Dauer der Förderpause zwischen der Vor- und der Haupteinspritzung festlegende Differenz b - a größer als der festgelegte Abstand a. Dieser Zusammenhang ist deutlicher aus der Darstellung in Figur 6 zu ersehen. Der in Figur 1 und auch in Figur 5 mit c bezeichnete Abstand zwischen der Quernut 37 und der pumpenarbeitsraumseitigen Stirnfläche 17 des Pumpenkolbens ist in bevorzugter Weise kleiner als die Breite d der Ringnut 41, so daß bei der Zwischenabsteuerung zwischen Vor- und Haupteinspritzung eine direkte, also kürzestmögliche Verbindung zwischen dem Pumpenarbeitsraum 18 über die Ringnut 41 und Quernut 37 zur Steueröffnung 23 hergestellt wird. Wenn der Unterschied zwischen diesem Abstand c und der Breite d der Ringnut 41 aber kleiner ist als die die Förderpause bestimmende Differenz b - a (siehe dazu Figur 6), dann taucht beim Förderbeginn der Haupteinspritzung, wie in Figur 6 gezeigt ist, die Kolbenstirnseite 17 bereits wieder in die Führung der Zylinderbohrung 15 ein, so daß sich hier eine gute Führung ergibt und kurz vor der in Figur 6 gezeigten Kolbenstellung der Rückströmkraftstoff seinen Weg vom Pumpenarbeitsraum 18 über den Ausschnitt 32 bzw. die Stoppnuten 29 in die Ringnut 41 und von dort über die Quernut 37 zur Steueröffnung 23 nimmt. Deshalb ist ein zur Erzielung der Förderpause zwischen der Vor- und Haupteinspritzung den Pumpenarbeitsraum 18 mit dem Niederdruckraum 24 verbindender Entlastungskanal 43 am deutlichsten aus der in Figur 5 gezeigten Darstellung zu entnehmen, da dort der Pumpenkolben 16 in seiner kurz nach dem Förderende der Voreinspritzung eingenommenen Hublage steht und der vom Pumpenarbeitsraum 18 ausgehende Entlastungskanal 43, wie durch kleine Pfeile angedeutet, von dort durch die Ringnut 41 und die Quernut 37 zur Steueröffnung 23 verläuft, wobei die Ringnut 41 in jeder Hubstellung, auch der in Figur 6 gezeigten, über den Ausschnitt 32 des Pumpenkolbens 16 mit dem Pumpenarbeitsraum 18 in Verbindung steht. Dies verhindert eine schädliche Drosselung des Rückströmkraftstoffes vor dem Förderbeginn der Haupteinspritzung.

Der für die Förderung der Voreinspritzmenge verantwortliche Pumpenkolbenhubanteil ist gleich der Überdeckung, d. h. dem Abstand zwischen der zweiten Steuerkante 35 und der Unterkante 42 der Ringnut 41. Diese Überdeckung ergibt sich aus der Differenz zwischen dem festgelegten Abstand a und dem Abstand zwischen der ersten Steuerkante 33 und der zweite Steuerkante 35.

Die in Figur 3 gezeigte Abwicklung der Mantelfläche 25 des Pumpenkolbens 16 zeigt die räumliche Lage der Steuerkanten, Ausschnitte und Nuten zueinander und es sind hier auch die zuvor beschriebenen Abstands- und Breitenmaße a bis d eingetragen. Außerdem sind in dieser Darstellung für die in Figur 1 gezeichnete Hublage des Pumpenkolbens 16 bei Förderbeginn der Voreinspritzung die Steueröffnungen 22 und 23 sowie die Ringnut 41 dick strichpunktiert eingezeichnet. Bei einem simulierten Förderhub des Pumpenkolbens 16 sind dann gedanklich die Steueröffnungen 22, 23 und die Ringnut 41 parallel und zugleich, d. h. miteinander nach unten zu verschieben.

Die Wirkungsweise der gemäß der Erfindung ausgebildeten Kraftstoffeinspritzpumpe wird nachfolgend anhand der Figuren 1, 5 und 6 erläutert.

Wie bereits ausgeführt, steht der Pumpenkolben 16 in Figur 1 in seiner den Förderbeginn der Voreinspritzung einleitenden Stellung bzw. Hublage nach einem in bekannter Weise durchlaufenen Vorhub bis zum Abschluß der Steueröffnung 22 durch die an die erste Steuerkante 33 anschließende Steuerfläche. Zur Vereinfachung der Darstellungsweise wird nachstehend nur noch von der Steuerfunktion der Kanten und Öffnungen gesprochen, wobei es selbstverständlich ist, daß die benachbarten Steuerflächen entsprechend wirksam werden. In dieser Förderbeginnstellung ist der Pumpenarbeitsraum 18 völlig abgeschlossen, und die Förderung der Voreinspritzmenge beginnt in nicht näher dargestellter Weise über die Druckleitung zur Einspritzdüse nach Öffnen des Druckventils 19. Als Druckventil wird in bevorzugter Weise ein bekanntes Gleichdruckentlastungsventil eingesetzt.

Wenn nun nach einem relativ kurzen, der zu fördernden Voreinspritzmenge entsprechenden Hub, der dem Abstand zwischen der ersten Steuerkante 33 und der zweiten Sternerkante 35 der Quernut 37 entspricht, die Ringnut 41 mach Überschleifen ihrer Unterkante 42 durch die zweite Steuerkante 35 aufgesteuert wird, dann ist das Förderende der Voreinspritzung erreicht, und bei der in Figur 5 dargestellten Hublage des Pumpenkolbens 16 strömt ein Zwischenabsteuerkraftstoff entlang dem mit Pfeilen angedeuteten Strömungsweg durch den dort von der Ringnut 41 und Quernut 37 gebildeten Entlastungskanal 43 vom Pumpenarbeitsraum 18 zur Steueröffnung 23 und von dort in den Niederdruckraum 24, durch relativ große Querschnitte gesteuert, sehr schnell ab. Dabei schließt das Druckventil 19 und öffnet sich erst wieder, wenn nach Abschluß dieses Entlastungskanals 43 in der in Figur 6 gezeichneten Hublage des Pumpenkolbens 16 die dritte Steuerkante 36 der Quernut 37 die zweite Steueröffnung 23 durch Überschleifen der Begrenzungskante 34 verschließt. Jetzt ist der Abströmweg wiederum unterbrochen, und die Förderung der Haupteinspritzmenge beginnt bis zu der durch Wiederöffnen der beiden Steueröffnungen 22 und 23 erfolgenden Absteuerung mittels der beiden schrägen Steuerkanten 28. Diese Absteuerung erfolgt wie bei bekannten zweiflutigen Pumpenelementen und ist deshalb nicht in einer besonderen Figur dargestellt.

## Patentansprüche

1. Kraftstoffeinspritzpumpe für Dieselbrennkraftmaschinen zur Förderung einer in eine Vor- und Haupteinspritzmenge unterteilten Kraftstoffmenge,
- mit mindestens einem axial- und drehbeweglich innerhalb eines Pumpenzylinders (14) geführten, einen Pumpenarbeitsraum (18) begrenzenden Pumpenkolben (16), dessen Mantelfläche (25) unterbrochen ist von mindestens einer pumpenarbeitsraumseitig durch eine schräge Steuerkante (28) begrenzten, ständig mit dem Pumpenarbeitsraum (18) in Verbindung stehenden Ausnehmung (26), von einem eine erste waagrechte, senkrecht zur Kolbenlängsachse (A) sich erstreckende Steuerkante (33) an einem gegenüber einer pumpenarbeitsraumseitigen Stirnfläche (17) des Pumpenkolbens (16) zurückgesetzten Absatz (31) bildenden Ausschnitt (32) und von einer dem Ausschnitt diametral gegenüberliegenden, pumpenarbeitsraumseitig eine zweite waagrechte und eine dritte Steuerkante (35, 36) bildenden Quernut (37) zwischen der Ausnehmung (26) und der Stirnfläche (17),
- mit zwei einander diametral gegenüberliegenden Steueröffnungen (22, 23) in der Wand des Pumpenzylinders (14), von denen die erste Steueröffnung (22) zur Einleitung des Förderbeginns der Voreinspritzung, von der ersten Steuerkante (33) gesteuert, verschließbar und zumindest eine der beiden Steueröffnungen (22, 23) zur Beendigung der Haupteinspritzung, von der schrägen Steuerkante (28) gesteuert, durch die Ausnehmung (26) aufsteuerbar ist, und
- mit einem zur Erzielung einer Förderpause zwischen der Vor- und Haupteinspritzung den Pumpenarbeitsraum (18) über die Quernut (37) mit einem Niederdruckraum (24) verbindenden Entlastungskanal (43),
dadurch gekennzeichnet, daß sich die beiden Steueröffnungen (22, 23), auf gleicher Höhe zueinander fluchtend, gegenüberliegen, der Entlastungskanal (43) in der Zylinderbohrung (15) des Pumpenzylinders (14) eine mit einem festgelegten Abstand (a)zu den Steueröffnungen (22, 23) und zum Pumpenarbeitsraum (18) hin versetzte Ringnut (41) aufweist und die Quernut (37) am Pumpenkolben (16) als kolbenseitig geschlossene Sackausnehmung ausgebildet ist, durch deren zweite Steuerkante (35) beim Überschleifen einer Unterkante (42) der Ringnut (41) das Förderende der Voreinspritzung bestimmbar ist,
- daß die den Abstand zwischen der zweiten und dritten Steuerkante (35 und 36) bestimmende Breite (b) der Quernut (37) um eine die Dauer der Förderpause festlegende Differenz (b -a ) größer ist als der festgelegte Abstand (a) zwischen der zweiten Steueröffnung (23) und der Unterkante (42) der Ringnut (41), wobei durch die dritte Steuerkante (36) beim Förderhub mit Abschluß der zweiten Steueröffnung (23) der Förderbeginn der Haupteinspritzung steuerbar ist,
- daß eine zweite, ebenfalls eine schräge Steuerkante (28) aufweisende Ausnehmung (27), um 180° zur ersten Ausnehmung (26) versetzt, in der Mantelfläche (25) des Pumpenkolbens (16) angeordnet ist und
- daß der Entlastungskanal (43), vom Pumpenarbeitsraum (18) ausgehend, über den Ausschnitt (32) und durch die Ringnut (41) zur Quernut (37) und von dieser über die zweite Steueröffnung (23) zum Niederdruckraum (24) verläuft.

2. Kraftstoffeinspritzpumpe nach Anspruch 1, dadurch gekennzeichnet, daß die beiden Steueröffnungen (22, 23; 122, 123; 222, 223) einen unrunden Querschnitt mit pumpenarbeitsraumseitig einer weitgehend geraden, gegebenenfalls leicht gebogenen, insgesamt aber senkrecht zur Kolbenlängsachse (A) verlaufenden Begrenzungskante (34; 134; 234) aufweisen (Figuren 4, 4a und 4b).

3. Kraftstoffeinspritzpumpe nach Anspruch 2, dadurch gekennzeichnet, daß die beiden, mit der geraden Begrenzungskante (34; 134; 234) versehenen Steueröffnungen (22, 23; 122, 123; 222, 223) zumindest in dem mit den schrägen Steuerkanten (28) des Pumpenkolbens (16) zusammenwirkenden Bereich einen dem Durchmesser einer üblichen Steuerbohrung entsprechenden Radius (R) aufweisen (Figuren 4, 4a und 4b).

4. Kraftstoffeinspritzpumpe nach Anspruch 3, dadurch gekennzeichnet, daß die Länge (l) der geraden Begrenzungskante (34) etwa dem zweifachen Radius (R) der Steueröffnung (34) entspricht (Figur 4).

5. Kraftstoffeinspritzpumpe nach Anspruch 3, dadurch gekennzeichnet, daß die Länge (l₁; l₂) der geraden Begrenzungskante (134; 234) größer ist als der zweifache Radius (R) der Steueröffnungen (Figuren 4a und 4b).

6. Kraftstoffeinspritzpumpe nach Anspruch 3 dadurch gekennzeichnet, daß beide Steueröffnungen (222, 223) mit Bezug auf die Kolbenlängsachse (A) symmetrisch geformt sind und mit der pumpenarbeitsraumseitigen geraden Begrenzungskante (234), dem antriebsseitig mittig angeordneten Radius (R) und zwei schrägen, den Radius (R) mit der geraden Begrenzungskante (234) - vorzugsweise mit einem kleinen Übergangsradius (r) - verbindenden Seitenkanten (39) einen, einem auf der Spitze stehenden Dreieck angenäherten Querschnitt aufweisen (Figur 4b).

7. Kraftstoffeinspritzpumpe nach einem der Ansprüche 2 bis 6, dadurch gekennzeichnet, daß der Abstand (c) zwischen der Quernut (37) und der pumpenarbeitsraumseitigen Stirnfläche (17) kleiner ist als die Breite (d) der Ringnut (41).

8. Kraftstoffeinspritzpumpe nach einem der Ansprüche 2 bis 7, dadurch gekennzeichnet, daß die Breite (d) der Ringnut (41) kleiner ist als die in Hubrichtung des Pumpenkolbens (16) gemessene Höhe (h) der Steueröffnungen (22, 23).

## Claims

1. Fuel injection pump, for diesel internal combustion engines, for delivering a fuel quantity subdivided into a pre-injection quantity and a main injection quantity
- having at least one axially movable and rotationally movable pump piston (16) guided within a pump cylinder (14) and bounding a pump working space (18), the outer surface (25) of which pump piston (16) is interrupted by at least one recess (26) on the pump working space end, bounded by an oblique control edge (28) and in continuous connection with the pump working space (18), by a cutout (32) forming a first horizontal control edge (33), extending at right angles to the piston longitudinal axis (A), on a step (31) set back relative to an end surface (17) on the pump working space end of the pump piston (16) and by a transverse groove (37), forming a second horizontal and a third control edge (35, 36), diametrically opposite to the cutout on the pump working space end, between the recess (26) and the end surface (17),
- having two control openings (22, 23) diametrically opposite to one another in the wall of the pump cylinder (14), of which the first control opening (22) can be closed, controlled by the first control edge (33), for initiating the beginning of delivery of the pre-injection, and at least one of the two control openings (22, 23) can be opened by the recess (26), controlled by the oblique control edge (28), for ending the main injection, and
- having a relief passage (43) connecting the pump working space (18) via the transverse groove (37) to a low pressure space (24) to achieve a delivery pause between the pre-injection and the main injection,
characterized
- in that the two control openings (22, 23) aligned with one another at the same level are opposite, the relief passage (43) in the cylinder bore (15) of the pump cylinder (14) has an annular groove (41) offset relative to the pump working space (18) at a fixed distance (a) from the control openings (22, 23), and the transverse groove (37) on the pump piston (16) is configured as a pocket recess closed at the piston end, by means of the second control edge (35) of which pocket recess the end of delivery of the pre-injection can be determined when the pocket recess passes over a lower edge (42) of the annular groove (41),
- in that the width (b), of the transverse groove (37), determining the distance between the second and third control edges (35 and 36) is greater, by a difference (b - a) fixing the duration of the delivery pause, than the fixed distance (a) between the second control opening (23) and the lower edge (42) of the annular groove (41), the beginning of delivery of the main injection being controllable by the third control edge (36) during the delivery stroke with the closing of the second control opening (23),
- in that a second recess (27), likewise having an oblique control edge (28) and offset by 180° relative to the first recess (26), is arranged on the outer surface (25) of the pump piston (16) and
- in that the relief passage (43), starting from the pump working space (18), extends via the cutout (32) and through the annular groove (41) to the transverse groove (37) and from the latter via the second control opening (23) to the low pressure space (24).

2. Fuel injection pump according to Claim 1, characterized in that the two control openings (22, 23; 122, 123; 222, 223) have a non-circular cross-section with, at the pump working space end, a boundary edge (34; 134; 234) which is substantially straight, if necessary slightly bent, but extending overall at right angles to the piston longitudinal axis (A) (Figures 4, 4a and 4b).

3. Fuel injection pump according to Claim 2, characterized in that the two control openings (22, 23; 122, 123; 222, 223) provided with the straight boundary edge (34; 134; 234) have a radius (R) corresponding to the diameter of a conventional control hole at least in the region interacting with the oblique control edges (28) of the pump piston (16) (Figures 4, 4a and 4b).

4. Fuel injection pump according to Claim 3, characterized in that the length (l) of the straight boundary edge (34) corresponds approximately to twice the radius (R) of the control opening (34) (Figure 4).

5. Fuel injection pump according to Claim 3, characterized in that the length (l₁; l₂) of the straight boundary edge (134; 234) is larger than twice the radius (R) of the control openings (Figures 4a and 4b).

6. Fuel injection pump according to Claim 3, characterized in that both control openings (222, 223) are symmetrically shaped with respect to the piston longitudinal axis (A) and, together with the straight boundary edge (234) at the pump working space end, the radius (R) arranged centrally at the drive end and two oblique side edges (39) connecting the radius (R) to the straight boundary edge (234) - preferably with a small transition radius (r) - have a cross-section which approximates to a triangle standing on its apex (Figure 4b).

7. Fuel injection pump according to one of Claims 2 to 6, characterized in that the distance (c) between the transverse groove (37) and the end surface (17) at the pump working space end is smaller than the width (d) of the annular groove (41).

8. Fuel injection pump according to one of Claims 2 to 7, characterized in that the width (d) of the annular groove (41) is smaller than the height (h), measured in the lift direction of the pump piston (16), of the control openings (22, 23).

## Revendications

1. Pompe d'injection de carburant pour des moteurs Diesel à combustion interne servant au refoulement d'une quantité de carburant subdivisée en une quantité nécessaire à la préinjection et une quantité nécessaire à l'injection principale
- avec au moins un piston de pompe (16) guidé à l'intérieur d'un cylindre de pompe (14) de façon à se déplacer axialement et à pouvoir tourner, en délimitant une chambre de travail de la pompe (18) dont l'enveloppe (25) est interrompue par au moins un évidement (26) situé du côté de la chambre de travail de la pompe, limité par une arête de commande oblique (28) se trouvant en permanence en liaison avec la chambre de travail de la pompe (18), par une section (32) formant une première arête de commande (33) s'étendant horizontalement et perpendiculairement à l'axe longitudinal du piston (A) sur un appendice (31) décalé en arrière par rapport à une face frontale (17) du piston de la pompe (16) située du côté de la chambre de travail de la pompe, et par une rainure transversale (37) comprise entre l'évidement (26) et la face frontale (17), située diamétralement en regard de la section (32) et formant du côté de la chambre de travail de la pompe une deuxième arête de commande horizontale et une troisième arête de commande (35, 36),
- avec deux orifices de commande situées diamétralement en regard l'un de l'autre (22, 23) dans la paroi du cylindre de la pompe (14), dont le premier orifice de commande (22) commandé par la première arête de commande (33) pour initier le début du refoulement du carburant nécessaire à la préinjection peut être fermé et dont au moins l'un des deux orifices de commande (22, 23) servant à terminer l'injection principale, commandé par l'arête oblique de commande (28), peut être ouvert par l'évidement (26), et
- avec un canal de décharge (43) servant à obtenir une pause du refoulement entre la préinjection et l'injection principale, et reliant la chambre de travail de la pompe (18), via la rainure transversale (37), à une chambre basse pression (24);
pompe d'injection de carburant caractérisée en ce que :
- les deux orifices de commande (22, 23) alignés l'un sur l'autre se situent en regard l'un de l'autre à la même hauteur, le canal de décharge (43) formé dans l'alésage cylindrique (15) du cylindre de la pompe (14) présente une rainure annulaire (41) avec un distance déterminée (a) par rapport aux orifices de commande (22, 23) et désaxée en direction de la chambre de travail de la pompe (18), et la rainure transversale (37) est constituée sur le piston de la pompe (16) sous la forme d'un trou borgne fermé du côté du piston, la fin du refoulement de la préinjection pouvant être déterminée par sa deuxième arête de commande (35) lors du recouvrement d'une arête inférieure (42) de la rainure annulaire (41),
- la largeur (b) de la rainure transversale (37) qui détermine la distance comprise entre la deuxième arête et la troisième arête de commande (35 et 36), est plus grande que la distance déterminée (a) comprise entre le deuxième orifice de commande (23) et l'arête inférieure (42) de la rainure annulaire (41), d'une différence (b - a) déterminant la durée de la pause du refoulement, le début du refoulement du carburant nécessaire à l'injection principale pouvant être commandé par la troisième arête de commande (36) lors de la course de refoulement avec fermeture du deuxième orifice de commande (23),
- on dispose un deuxième évidement (27) présentant également une arête de commande (28) oblique décalée de 180° par rapport au premier évidement (26), dans l'enveloppe (25) du piston de la pompe (16) et
- le canal de décharge (43) s'étend, en partant de la chambre de travail de la pompe (18), via la section (32) et à travers la rainure annulaire (41), jusqu'à la rainure transversale (37), et depuis celle-ci, via le deuxième orifice de commande (23), jusqu'à la chambre basse pression (24).

2. Pompe d'injection de carburant selon la revendication 1, caractérisée en ce que les deux orifices de commande (22 23; 122, 123; 222, 223) présentent une section transversale non ronde avec, du côté de la chambre de travail de la pompe, une arête de délimitation (34 ; 134 ; 234) largement rectiligne, le cas échéant légèrement cintrée, mais s'étendant au total perpendiculairement à l'axe longitudinal (A) du piston (figures 4, 4a et 4b).

3. Pompe d'injection de carburant selon la revendication 2, caractérisée en ce que les deux orifices de commande (22; 23; 122, 123; 222, 223) pourvus des arêtes de délimitation rectilignes (34 ; 134 ; 234), présentent au moins dans la zone coopérant avec les arêtes de commande obliques (28) du piston de la pompe (16), un rayon (R) correspondant au diamètre d'un alésage de commande habituel (figures 4, 4a et 4b).

4. Pompe d'injection de carburant selon la revendication 3, caractérisée en ce que la longueur (l) des arêtes rectilignes de délimitation (34) correspond à peu près au double du rayon (R) de l'orifice de commande (34), (figure 4).

5. Pompe d'injection de carburant selon la revendication 3, caractérisée en ce que la largeur (l₁; l₂) des arêtes de délimitation (134 ; 234) est plus grande que le double du rayon (R) des orifices de commande (figures 4a et 4b).

6. Pompe d'injection de carburant selon la revendication 3, caractérisée en ce que les deux orifices de commande (222, 223) sont formés de façon symétrique par rapport à l'axe longitudinal du piston (A) et présentent une section transversale voisine de celle d'un triangle se tenant sur sa pointe, avec l'arête de délimitation (234) rectiligne située du côté de la chambre de travail de la pompe, avec le rayon (R) disposé au milieu du côté de l'entraînement, et avec deux arêtes latérales (39) obliques reliant le rayon (R) à l'arête de limitation rectiligne (234), de préférence avec un petit rayon (r) de transition.

7. Pompe d'injection de carburant selon l'une des revendications 2 à 6, caractérisée en ce que la distance (c) comprise entre la rainure transversale (37) et la face frontale (17) située du côté de la chambre de travail de la pompe, est plus petite que la largeur (d) de la rainure annulaire (41).

8. Pompe d'injection de carburant selon l'une des revendications 2 à 7, caractérisée en ce que la largeur (d) de la rainure annulaire (41) est plus petite que la hauteur (h) des orifices de commande (22, 23), mesurée dans le sens de la course du piston de la pompe (16).
